# EUROPÄISCHE PATENTSCHRIFT

(11) **EP 1 071 874 B1**
(45) Veröffentlichungstag und Bekanntmachung des Hinweises auf die Patenterteilung: **28.04.2004**
(21) Anmeldenummer: 00914027.8
(22) Anmeldetag: 12.02.2000
(51) Int. Cl.: F02D 41/30, F02D 41/26, G05B 15/02

(54) **VERFAHREN UND VORRICHTUNG ZUM BETRIEB EINER BRENNKRAFTMASCHINE**
METHOD AND DEVICE FOR OPERATING AN INTERNAL COMBUSTION ENGINE
PROCEDE ET DISPOSITIF POUR FAIRE FONCTIONNER UN MOTEUR A COMBUSTION INTERNE

(30) Priorität: 16.02.1999 DE 19906378
(43) Veröffentlichungstag der Anmeldung: 31.01.2001
(73) Patentinhaber: ROBERT BOSCH GMBH, 70442 Stuttgart (DE)
(72) Erfinder: WILD, Ernst, D-71739 Oberriexingen (DE); HERYNEK, Roland, D-75443 Oetisheim (DE); STEGER, Mirjam, D-71665 Vaihingen (DE); MENRAD, Gudrun, D-70174 Stuttgart (DE); REUSCHENBACH, Lutz, D-70469 Stuttgart (DE); ODER, Michael, D-75428 Illingen (DE); HESS, Werner, D-70499 Stuttgart (DE); HILLNER, Hans, D-76131 Karlsruhe (DE); MALLEBREIN, Georg, D-70825 Korntal-Muenchingen (DE); KOEHLER, Christian, D-74391 Erligheim (DE)
(86) Internationale Anmeldenummer: PCT/DE2000/000416
(87) Internationale Veröffentlichungsnummer: WO 2000/049281

(56) Entgegenhaltungen:
- DE-A- 19 631 986
- DE-A- 19 744 230
- DE-A- 19 850 586
- US-A- 4 706 630

## Beschreibung

### Stand der Technik

Die Erfindung betrifft ein Verfahren zum Betrieb einer Brennkraftmaschine, insbesondere einer Brennkraftmaschine mit Direkteinspritzung (DE) oder Saugrohreinspritzung (SRE), und mit einem Steuergerät, wobei das Steuergerät bzw. seine Software eine Vielzahl von Funktionen und einen Scheduler zum Aktivieren der Funktionen aufweist.

Aus der noch unveröffentlichten Patentanmeldung DE 197 44 230 ist ein Steuergerät für ein System und ein Verfahren zum Betrieb eines Steuergeräts bekannt, bei dem das Steuergerät Funktionsmodule, einen Scheduler zur Aktivierung der Funktionsmodule und einen Prioritätsverwalter aufweist. Der Prioritätsverwalter ordnet den Funktionsmodulen veränderbare Prioritäten zu, die dann bei der Aktivierung von Funktionsmodulen durch den Scheduler berücksichtigt werden.

Die US 4,706,630 offenbart ein Motor-Steuergerät bei dem ein Scheduler die aktuell vorliegende Betriebsart (Modus) festlegt. Die Basis-Motor-Strategie stellt hierbei die Ansteuerungs-Logik für einen wanngelaufenden Motor im Normalbetrieb zur Verfügung und ist in fünf Betriebsarten (Moden) aufgeteilt. Liegen die Betriebsbedingungen außerhalb der Normalbedingungen, beispielsweise beim Start eines kalten Motors, greift die Modulator-Strategie in die Basis-Motor-Strategie ein und passt eine ausgewählte Betriebsart entsprechend an, wobei innerhalb der Basis-Motor-Strategie bspw. ein geeignetes Luft/Kraftstoffgemisch oder geeignete Zündzeitpunkte berechnet werden.

Der vorliegenden Erfindung liegt die Aufgabe zugrunde, ein Verfahren der gattungsgemäßen Art derart zu verbessern, daß Funktionen in Abhängigkeit von den Betriebsbedingungen der Brennkraftmaschine optimal aktiviert werden.

Die Aufgabe der vorliegenden Erfindung wird mit den Merkmalen des Anspruchs 1 bzw 13 gelöst.

### Vorteile der Erfindung

Der besonders große Vorteil der vorliegenden Erfindung liegt darin, daß Funktionen nur dann markiert bzw. zur Aktivierung bereitgestellt werden, wenn sie in einer der momentan möglichen Betriebsarten der Brennkraftmaschine ablaufen dürfen.

Weitere Vorteile der Erfindung ergeben sich in Verbindung mit den Unteransprüchen aus der nachfolgenden Beschreibung von Ausführungsbeispielen.

Besonders hervorzuheben ist insbesondere, daß sichergestellt wird, daß markierte Funktionen nur dann aktiviert werden, wenn eine für sie zulässige Betriebsart eingestellt ist, und daß der Scheduler aktiv in die Betriebsartauswahl eingreifen kann.

### Zeichnung

Ausführungsbeispiele der Erfindung sind in der Zeichnung dargestellt und in der nachfolgenden Beschreibung näher erläutert.
Die Figur 1 zeigt schematisch eine Darstellung einer Brennkraftmaschine mit einem Steuergerät.
Die Figur 2 zeigt schematisch das Steuergerät mit den Funktionen Betriebsartenkoordination und Betriebsartenumschaltung.
Figur 3 zeigt auch ein Steuergerät mit den Funktionen Betriebsartenkoordination und Betriebsartenumschaltung, wobei die Funktionsweise des Schedulers innerhalb der Betriebsartenumschaltung dargestellt ist.
Die Figur 4 zeigt schematisch den Verfahrensablauf eines erfindungsgemäßen Auswahlverfahrens im Scheduler.
Die Figur 5 zeigt schematisch in Form einer Tabelle ein Beispiel für einen Auswahlprozeß im Scheduler.

### Beschreibung der Ausführungsbeispiele

Obwohl die vorliegende Erfindung am Beispiel einer Brennkraftmaschine mit Direkteinspritzung näher beschrieben wird, kann diese Erfindung zur Steuerung beliebiger elektromechanischer Systeme, die mit einer Steuervorrichtung ausgerüstet werden können, angewendet werden.

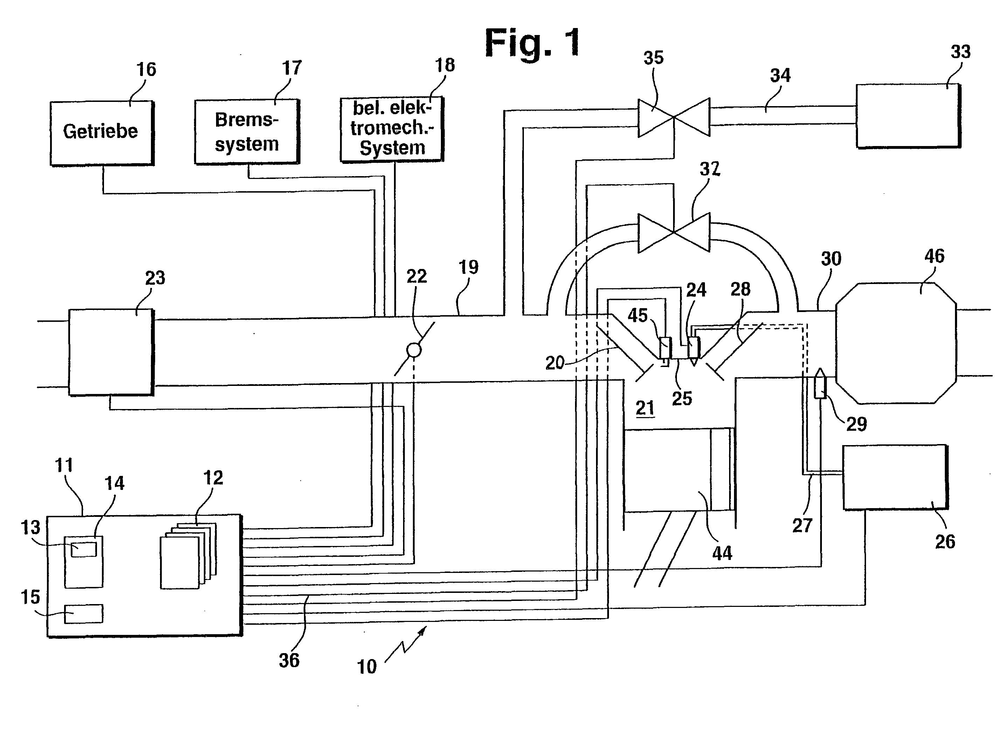

Wie in der Figur 1 dargestellt, wird bei einer Brennkraftmaschine mit Direkteinspritzung 10 Frischluft mittels eines Saugrohres 19 über ein Einlaßventil 20 einer Brennkammer 21 zugeführt. Über eine Drosselklappe 22 kann die Menge der in die Brennkammer 21 zugeführten Frischluft gesteuert werden. Ein Luftmengenmesser 23 erfaßt die in die Brennkraftmaschine einströmende Frischluft. Ein Einspritzventil 24 und eine Zündkerze 45 sind im Zylinderkopf 25 angeordnet. Mittels einer Hochdruckpumpe 26 wird der Kraftstoff auf einen Arbeitsdruck gebracht und über eine Kraftstoffleitung 27 und Einspritzventile 24 in die Brennkammer 21 gespritzt. Mit Hilfe der Zündkerze 45 wird der eingespritzte Kraftstoff entzündet. Durch die Ausdehnung des entzündeten Kraftstoffs wird ein Kolben 44 angetrieben. Weiterhin weist die Brennkammer 21 ein Auslaßventil 28 zum Ausstoß der bei einer Verbrennung entstehenden Abgase auf. Mittels einer Breitband-Lambda-Sonde (LSU) 29 im Abgasrohr 30 kann der Sauerstoffanteil im Abgas gemessen werden, wodurch das Luft-/Kraftstoffverhältnis im Gemisch ermittelt werden kann. Im Abgasrohr 30 ist ein Katalysator 46 angeordnet. Der Katalysator 46 hat die Aufgabe schädliche Abgaskomponenten wie CO, HC und NO in CO2, H2O und N2 umzuwandeln. Eine AGR-Leitung 31 verbindet das Ausstoßrohr 30 mit dem Saugrohr 19, wodurch aufgrund des höheren Drucks im Ausstoßrohr 30 Abgase vom Ausstoßrohr 30 in das Ansaugrohr 19 geleitet werden. Mit Hilfe des AGR-Ventils 32 kann der Abgastrom in der AGR-Leitung 31 gesteuert werden. Von einem Kraftstofftank bzw. Aktivkohlebehälter 33 führt eine Tankentlüftungsleitung 34 zum Saugrohr 19, wodurch zusätzlich Kraftstoff in das Saugrohr 19 und damit auch in den Brennraum 21 gelangen kann. Mittels eines Tankentlüftungsventils 35 kann der Kraftstofffluß in der Tankentlüftungsleitung 34 gesteuert werden. Die Steuerung der gesamten Brennkraftmaschine 10 erfolgt mittels eines Steuergeräts 11. Weiterhin kann das Steuergerät 11 ein Getriebe 16, ein Bremssystem 17 und beliebige weitere elektromechanische Systeme 18 steuern. Über Signal- und Steuerleitungen 36 sind die verschiedenen Sensoren und Aktuatoren mit dem Steuergerät 11 verbunden.

Das Steuergerät 11 weist eine Betriebsartenkoordination 14 und eine Betriebsartenumschaltung 15 und eine Vielzahl von Funktionen 12 auf. Die Betriebsartenkoordination 14 weist einen Scheduler 13 auf. Der Scheduler 13 verwaltet im allgemeinen Diagnose- und Motorsteuer-Funktionen 12, die Kopplungen untereinander aufweisen und deshalb nicht gleichzeitig ablaufen können. Ein Beispiel hierfür sind die Funktionen Tankentlüftung und Diagnose der Breitband-Lambda-Sonde 29. Die Funktion Tankentlüftung, die zur Reduktion der Verdampfungsemissionen des Kraftstoffs dient, bewirkt, daß Kraftstoff aus dem Kraftstofftank bzw. Aktivkohlebehälter 33 in das Ansaugrohr 19 und dadurch in den Brennraum 21 gelangt. Die Funktion Diagnose der Breitband-Lambda-Sonde 29 überprüft, ob die Breitband-Lambda-Sonde 29 richtig funktioniert, hierzu sind jedoch definierte Bedingungen in der Kraftstoff- und Luftzufuhr der Brennkraftmaschine notwendig. Wird während der Diagnose der Breitband-Lambda-Sonde 29 die Funktion Tankentlüftung aktiviert, so strömt zusätzlicher Kraftstoff in den Brennraum, wodurch die Diagnosebedingungen (veränderte Kraftstoffzufuhr) sich ändern und das Ergebnis der Diagnose verfälscht wird.

Die Betriebsartenkoordination 14 wählt eine Soll-Betriebsart in Abhängigkeit von Betriebartenanforderungen der Funktionen 12 der Brennkraftmaschine 10 aus. Die Soll-Betriebsart geht in die Betriebsartenumschaltung 15 ein. Nach einer Umschaltung der Betriebsarten durch die Betriebsartenumschaltung 15 ist die Soll-Betriebsart als Ist-Betriebsart der Brennkraftmaschine eingestellt.

Die Brennkraftmaschine 10 kann in verschiedenen Betriebsarten betrieben werden, die sich im wesentlichen durch den Einspritzzeitpunkt und den Zündzeitpunkt unterscheiden. Zwischen den Betriebsarten der Brennkraftmaschine 10 kann mit Hilfe des Steuergeräts 11 umgeschaltet werden. Die Umschaltung der Betriebsarten wird von den Funktionen Betriebsartenkoordination 14 und Betriebsartenumschaltung 15 im Steuergerät 11 ausgelöst und durchgeführt. Betriebsarten der Brennkraftmaschine können sein: der Homogenbetrieb "hom", der homogene Magerbetrieb "hmm", der Schichtbetrieb "sch", der Homogen-Schicht-Betrieb "hos" und der Schicht-Katheizen "skh".

Im Homogenbetrieb "hom, wird der Kraftstoff von dem Einspritzventil 24 während einer durch die Kolbenbewegung hervorgerufenen Ansaugphase in den Brennraum 21 eingespritzt. Über die Drosselklappe 22 wird gleichzeitig Luft angesaugt. Die angesaugte Luft verwirbelt den Kraftstoff, der sich dadurch im Brennraum annähernd gleichmäßig bzw. homogen verteilt. Das Kraftstoff/Luft-Gemisch wird anschließend verdichtet, um dann von einer Zündkerze 45 entzündet zu werden. Das entzündete Kraftstoff/Luft-Gemisch dehnt sich aus und treibt den Kolben 44 an. Das entstehende Drehmoment hängt im Homogenbetrieb im wesentlichen von der Stellung der Drosselklappe 22 ab. Um ein hohes Drehmoment und eine geringe Schadstoffentwicklung bei der Verbrennung zu erzielen, wird das Luft-/Kraftstoff-Gemisch möglichst auf Lambda = 1 oder Lamda < 1 eingestellt.

Im homogenen Magerbetrieb "hmm" wird der Kraftstoff wie bei dem Homogenbetrieb während der Ansaugphase in den Brennraum 21 eingespritzt. Im Unterschied zu dem Homogenbetrieb wird ein Luft-/Kraftstoff-Gemisch mit lambda > 1 eingestellt.

Im Schichtbetrieb "sch" wird die Drosselklappe 22 weit geöffnet. Der Kraftstoff wird während der Verdichtungsphase in der unmittelbaren Umgebung der Zündkerze 45 eingespritzt. Dann wird der Kraftstoff von der Zündkerze 45 entzündet und durch die folgende Ausdehnung des entzündeten Kraftstoffs der Kolben 44 angetrieben. Das entstehende Drehmoment hängt im Schichtbetrieb im wesentlichen von der eingespritzten Kraftstoffmasse ab.

Im Homogen-Schicht-Betrieb "hos" erfolgt eine Doppeleinspritzung. Hierbei wird Kraftstoff während der Ansaugphase und während der Verdichtungsphase in den Brennraum 21 eingespritzt. Der Homogen-Schicht-Betrieb verbindet die Eigenschaften des Homogenbetriebs und des Schichtbetriebs. Mit Hilfe des Homogen-Schicht-Betriebs kann beispielsweise ein besonders weicher Übergang vom Homogenbetrieb in den Schichtbetrieb und umgekehrt erreicht werden.

In der Betriebsart Schicht-Katheizen "skh" erfolgt auch eine Doppeleinspritzung. Der Kraftstoff wird während der Verdichtungsphase und während der Arbeitsphase oder während der Verdichtungsphase und während der Ausstoßphase in den Brennraum eingespritzt. Hierdurch wird eine schnelle Erwärmung des Katalysators 46 bewirkt und im wesentlichen kein zusätzliches Drehmoment erzeugt. Diese Betriebsart ist beispielsweise beim Kaltstart der Brennkraftmaschine 10 von Bedeutung.

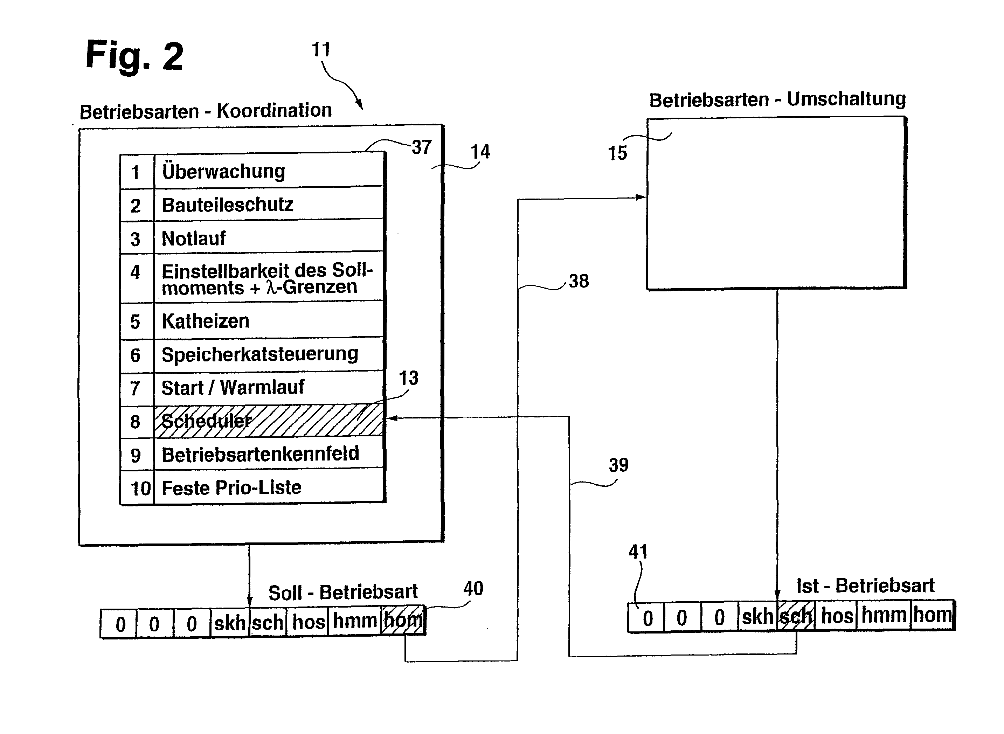

Figur 2 zeigt ein Steuergerät 11 mit den Funktionen Betriebsartenkoordination 14 und Betriebsartenumschaltung 15. Die Funktion Betriebsartenkoordination 14 weist eine Anforderungsliste 37 von Funktionen in der Reihenfolge ihrer Priorität auf.

Dabei handelt es sich um eine Funktion Überwachung der Brennkraftmaschine 10. Dadurch wird gewährleistet, daß die Brennkraftmaschine 10 nie ein zu hohes Moment erzeugt als angefordert. Weiter handelt es sich um einen Bauteileschutz. Dadurch wird gewährleistet, daß Betriebsgrenzen von Bauteilen nicht überschritten werden. Beispielsweise wird dadurch gewährleistet, daß die Temperatur des Ausstoßrohres 30 nie so hoch wird, daß eine Schädigung des Ausstoßrohres 30 oder des Katalysators 46 zu befürchten ist. Weiter handelt es sich um einen Notlauf der Brennkraftmaschine 10.

Durch diese Funktion wird gewährleistet, daß die Brennkraftmaschine 10 unter bestimmten Bedingungen im Schichtbetrieb, jedoch nicht im Homogenbetrieb betrieben werden kann. Weiter handelt es sich um die Einstellbarkeit eines Sollmomentes der Brennkraftmaschine 10 und um die Einhaltung von erwünschten Lambdagrenzen. Weiter handelt es sich um das mittels der bereits beschriebenen fünften Betriebsart durchgeführte Katheizen, mit dem insbesondere bei einem Kaltstart der Brennkraftmaschine 10 der Katalysator 46 schnell erwärmt wird. Weiter handelt es sich um eine Steuerung eines in dem Katalysator gegebenenfalls untergebrachten Speicherkatalysators, der zur Zwischenspeicherung von Stickoxyden vorgesehen ist. Diese Funktion gewährleistet, daß der Speicherkatalysator nach einer Beladung rechtzeitig wieder entladen wird. Weiter handelt es sich um die Funktion des Starts bzw. Warmlaufs, in dem die Brennkraftmaschine 10 beispielsweise nicht in der Betriebsart des Schichtbetriebs betrieben werden darf. Weiter handelt es sich um den Scheduler, der weitere untergeordnete Diagnose- und Motorsteuer-Funktionen verwaltet, insbesondere Diagnose- und Motorsteuer-Funktionen die Kopplungen untereinander aufweisen. Weiter handelt es sich um ein Betriebsartenkennfeld, das für den normalen Fahrbetrieb vorgesehen ist. Hier wird jedem Betriebspunkt der Brennkraftmaschine 10 eine Betriebsart zugeordnet. Weiter handelt es sich um eine feste Prioritätenliste der Betriebsarten der Brennkraftmaschine 10. Des weiteren können noch eine Mehrzahl anderer Funktionen in der Anforderungsliste 37 vorhanden sein.

Die Linien mit Pfeilen stellen Kommunikationsverbindungen 38, 39 zwischen der Betriebsartenkoordination 14 und der Betriebsartenumschaltung 15 dar. Ein Soll-Byte 40 und ein Ist-Byte 41 stellen schematisch die Soll- Betriebsart und die Ist-Betriebsart dar. Jedem Bit des Soll-Bytes 40 und des Ist-Bytes 41 ist eine Betriebsart zugeordnet, wobei einige Bits freigehalten werden, um neu hinzukommende Betriebsarten berücksichtigen zu können. Die schraffierten Flächen im Soll- bzw. Ist-Byte 40,41 bedeuten, daß diese Bits gesetzt sind und geben jeweils die aktuelle Soll- bzw. Ist-Betriebsart an.

Die in Fig. 2 dargestellte Betriebsartenkoordination 14 arbeitet derart, daß die Funktionen der Anforderungsliste 37 Betriebsartenanforderungen innerhalb der Betriebsartenkoordination 14 stellen bzw. Wunschbetriebsarten anfordern. Die Funktionen der Anforderungsliste 37 fordern nur diejenigen Betriebsarten an, in denen sie ablaufen dürfen. Einzelne Funktionen der Anforderungsliste 37 können auch gleichzeitig mehrere Wunschbetriebsarten anfordern. Der Scheduler 13 bildet eine Funktion der Anforderungsliste 37 und nimmt im hier beschriebenen Beispiel in der Reihenfolge der Prioritäten den Platz 8 ein nach der Funktion Start/Warmlauf. Äquivalent zu den anderen Funktionen der Anforderungsliste 37 fordert auch der Scheduler 13 eine oder mehrere Betriebsarten in der Betriebsartenkoordination 14 an.

Die Aufgabe der Betriebsartenkoordination 14 besteht darin, die Betriebsartenwünsche der einzelnen Funktionen der Anforderungsliste 37 in der Reihenfolge ihrer Prioritäten derart zu Verknüpfen, daß eine den Betriebsartenanforderungen entsprechende optimale Soll-Betriebsart ermittelt wird. Die Soll-Betriebsart wird dann im Soll-Byte 40 durch das Setzen des entsprechenden der Soll-Betriebsart zugeordneten Bits gekennzeichnet. In diesem Beispiel wurde die Betriebsart Homogen als Soll-Betriebsart ausgewählt.

Die Information über die ermittelte Soll-Betriebsart geht über die Kommunikationsverbindung 38 in die Betriebsartenumschaltung 15 ein. Die Aufgabe der Betriebsartenumschaltung 15 besteht darin, die Brennkraftmaschine 10 in die durch die Betriebsartenkoordination 14 ermittelte Soll-Betriebsart umzuschalten. Die Betriebsartenumschaltung 15 gibt weiterhin die Ist-Betriebsart der Brennkraftmaschine an. Im Ist-Byte 41 ist hier beispielsweise als aktuelle Ist-Betriebsart die Betriebsart Schicht gekennzeichnet. Die Information über die Ist-Betriebsart geht über die Kommunikationsverbindung 39 in die Betriebsartenkoordination 14 ein und wird hier speziell vom Scheduler 13 verwendet.

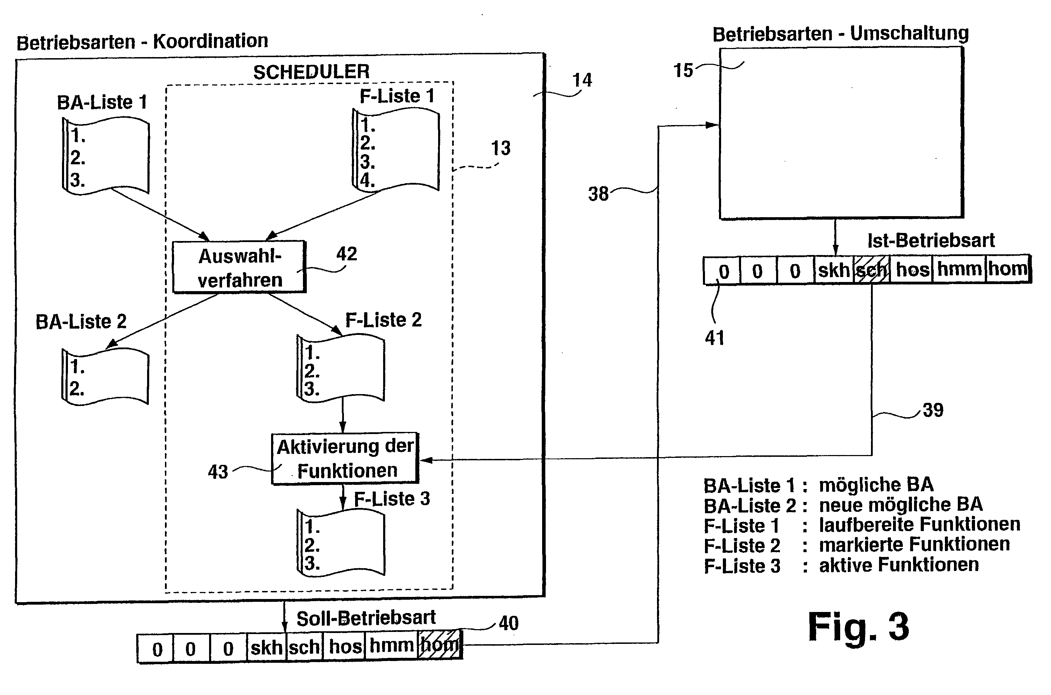

Figur 3 zeigt ein Steuergerät 11 mit den Funktionen Betriebsartenkoordination 14 und Betriebsartenumschaltung 15 wie bereits in der Figur 2 beschrieben. Innerhalb der Betriebsartenkoordination 14 beeinflußt der Scheduler 13 bzw. die Funktion Scheduler 13 die Auswahl der Soll-Betriebsart.

Der in Fig. 3 dargestellte Scheduler 13 verwaltet bzw. ist verantwortlich für die Aktivierung von Funktionen 12, die Kopplungen untereinander aufweisen und deshalb nicht gleichzeitig ablaufen dürfen. Im Scheduler 13 werden folgende Listen verarbeitet bzw. erzeugt:
-BA-Liste1: Liste der möglichen bzw. zur Auswahl stehenden Betriebsarten der Brennkraftmaschine 10, die aus einem Zwischenergebnis der Betriebsartenanforderungen der Funktionen der Anforderungsliste 37 der Betriebsartenkoordination 14 gebildet wird.
-BA-Liste2: neue Liste der möglichen Betriebsarten, in denen die vom Scheduler 13 markierten Funktionen 12 ablaufen dürfen und an die Betriebsartenkoordination 14 zur weiteren Verarbeitung gegeben wird.
-F-Liste1: Liste der laufbereiten Funktionen 12
-F-Liste2: Liste der markierten bzw. zur Aktivierung bereitgestellten Funktionen 12
-F-Liste3: Liste der aktiven Funktionen 12.

Im Scheduler 13 wird aus den vom Scheduler 13 zu verwaltenden Funktionen 12 eine Liste laufbereiter Funktionen 12 (F-Liste1) gebildet. Die F-Liste1 kann beispielsweise aus Funktionen 12 gebildet werden, die aufgrund der aktuellen physikalischen Bedingungen der Brennkraftmaschine 10 ablauffähig sind. Beispielsweise zeigt eine Funktion Warmlauf nur Laufbereitschaft, wenn die Temperatur der Brennkraftmaschine 10 unter einen bestimmten Wert liegt, der einer kalten Brennkraftmaschine 10 entspricht. In der Betriebsartenkoordination 14 wird eine Liste der möglichen Betriebsarten (BA-Liste1) ermittelt. Die BA-Liste1 wird aus einem Zwischenergebnis der Verknüpfung der Betriebsartenanforderungen der Funktionen 12 der Anforderungsliste 37 in der Figur 2 mit einer höheren Priorisierung als der Scheduler 13 gebildet.

Die BA-Liste1 und die F-Liste1 gehen in einem Auswahlverfahren 42 ein, in dem eine Liste der möglichen Betriebsarten (BA-Liste2) und eine Liste von markierten bzw. zur Aktivierung bereitgestellten Funktionen 12 (F-Liste2) erzeugt wird. Die durch das Auswahlverfahren 42 erzeugte BA-Liste2 geht in der Betriebsartenkoordination 14 zur weiteren Verarbeitung und zur Festlegung der Soll-Betriebsart ein. Die F-Liste2 geht zunächst in einem Block 43 ein. Im Block 43 werden die Funktionen 12 der F-Liste2 in Abhängigkeit von der aktuellen Ist-Betriebsart aktiviert. Die Funktionen 12 der F-Liste2 werden erst dann aktiviert, wenn eine diesen Funktionen 12 zugeordnete Ist-Betriebsart eingestellt ist. Die F-Liste3 beinhaltet schließlich die aktiven Funktionen 12.

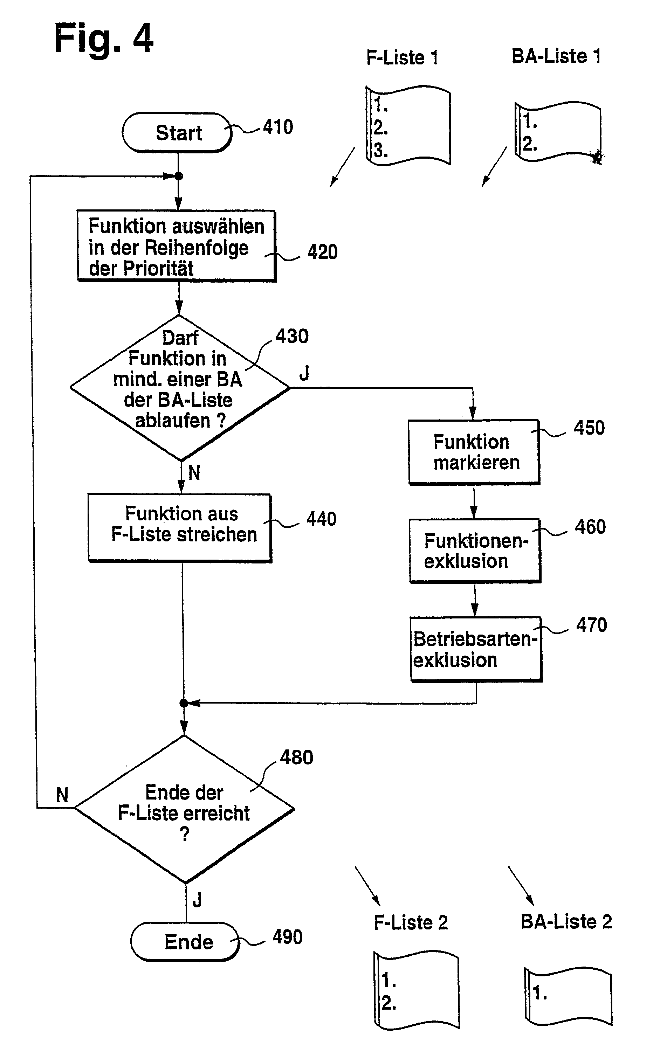

Die Figur 4 stellt ein beispielhaftes Auswahlverfahren 44 dar.

Das in Fig. 4 dargestellte Verfahren arbeitet derart, daß nach dem Start in Schritt 410 in einem Schritt 420 aus der Liste der laufbereiten Funktionen 12 (F-Liste1) zunächst die Funktion mit der höchstem Priorität ausgewählt wird. In einem weiteren Schritt 430 wird unter Hinzunahme der Liste der möglichen Betriebsarten (BA-Liste1) der Brennkraftmaschine 10 geprüft, ob die ausgewählte Funktion in einer der Betriebsarten der BA-Liste1 ablaufen darf, d.h. ob der ausgewählten Funktion mindestens eine der Betriebsarten der BA-Liste2 zugeordnet ist.

Ist dies der Fall, so wird in einem Schritt 450 die ausgewählte Funktion markiert. Gleichzeitig wird in einem Schritt 460 eine Funktionen-Exklusion durchgeführt. D.h. es werden alle Funktionen 12 aus der F_liste1 gestrichen, die nicht gleichzeitig mit der markierten Funktion ablaufen dürfen. Weiterhin wird in Schritt 470 eine Betriebsarten-Exklusion durchgeführt. D.h. die BA_liste1 wird um die Betriebsarten vermindert, die nicht der markierten Funktion zugeordnet sind.

Wenn die ausgewählte Funktion nicht in einer der Betriebsarten der BA-Liste1 ablaufen darf, dann wird diese Funktion in Schritt 440 aus der F-Liste1 gestrichen.

In Schritt 480 wird geprüft, ob das Ende der F-Liste1 erreicht wurde.

Ist das der Fall, so wird das Verfahren in Schritt 490 beendet und als Ergebnis erhält man eine neue Liste der markierten Funktionen 12 F-Liste2 und eine neue Liste der möglichen Betriebsarten BA-Liste2. Die F-Liste2 enthält die markierten Funktionen 12, d.h. die Funktionen 12 die zur Aktivierung bereitstehen. Die BA-Liste2 enthält die Betriebsart bzw. die Betriebsarten, in denen die Funktionen 12 aus der F-Liste2 ablaufen dürfen. Alle Funktionen 12 aus der F-Liste2 dürfen in jeder Betriebsart der BA-Liste2 ablaufen. Das bedeutet, daß wenn eine Betriebsart aus der BA_Liste2 eingestellt ist, alle Funktionen 12 der F-Liste2 aktiviert werden. Es kann jedoch auch möglich sein, daß eine Betriebsart eingestellt wird, die nicht in der BA_Liste2 enthalten ist und in der nicht alle Funktionen 12 der F-Liste2 ablaufen dürfen. In diesem Fall werden nur die Funktionen 12 der F-Liste2 aktiviert, die in der eingestellten Betriebsart ablaufen dürfen.

Wenn das Ende der F-Liste1 noch nicht erreicht wurde, dann wird in Schritt 420 eine weitere Funktion mit der nächst niedrigeren Priorität ausgewählt und das Verfahren wie oben beschrieben weiter durchgeführt. Hierzu muß noch bemerkt werden, daß Funktionen 12, die im Schritt 440 aus der F-Liste1 gestrichen wurden, nicht in Schritt 420 ausgewählt werden können.

Bei einer vorteilhaften Ausgestaltung der Erfindung ist vorgesehen, daß Funktionen 12 Betriebsarten der Brennkraftmaschine 10 darstellen bzw. repräsentieren. D.h. eine Funktion Homogen repräsentiert die Betriebsart Homogen, eine Funktion Schicht repräsentiert die Funktion Schicht, usw. Logischerweise wird diesen Funktionen 12 genau die Betriebsart zugeordnet, die sie repräsentieren. D.h. der Funktion Schicht wird die Betriebsart Schicht zugeordnet, der Funktion Homogen wird die Betriebsart Homogen zugeordnet, usw. Diese Funktionen 12 werden genauso wie die restlichen "normalen" Funktionen 12 vom Scheduler 13 verwaltet und nehmen auf die gleiche Art und Weise am Auswahlverfahren 42 teil.

Eine besondere Eigenschaft der Funktionen 12, die die Betriebsarten repräsentieren, ist, daß sie gegenüber den "normalen" Funktionen 12 nicht exklusiv sind, und daß auch die "normalen" Funktionen 12 gegenüber diesen Funktionen 12 nicht exklusiv sind. D.h. die Funktionen 12, die die Betriebsarten repräsentieren, beeinflussen nicht direkt die Auswahl der "normalen" Funktionen 12 im Auswahlverfahren 42, sie haben im wesentlichen nur Einfluß auf die Auswahl der Betriebsarten der BA-Liste2.

Eine weitere Eigenschaft dieser Funktionen 12, die die Betriebsarten repräsentieren, ist, daß sie in der F-Liste1 als ständig laufbereite Funktionen 12 eingehen. Da in der BA-Liste1 immer mindestens eine Betriebsart enthalten ist, die mit der zugeordneten Betriebsart einer dieser Funktionen 12 übereinstimmt und diese Funktionen 12 nicht exklusiv gegenüber den anderen "normalen" Funktionen 12 sind, wird immer mindestens eine dieser Funktionen 12 markiert. Eine markierte Funktion 12, die eine Betriebsart repräsentiert, bewirkt, daß nur die Betriebsart der sie zugeordnet ist, bei der Auswahl der Betriebsarten in der BA-Liste2 enthalten bleibt. Dadurch wird sichergestellt, daß nur eine Betriebsart in der BA-Liste2 zur weiteren Verarbeitung an die Betriebsartenkoordination 14 weitergegeben wird.

Aufgrund dessen, daß die Betriebsarten mit Hilfe von Funktionen 12 dargestellt werden, wird außerdem erreicht, daß die Auswahl der Betriebsarten der BA-Liste2 auf die gleiche Art und Weise wie die Auswahl der Funktionen 12 der F-Liste2 durchgeführt werden kann. Über die Prioritäten der Funktionen 12, die die Betriebsarten repräsentieren, können verschiedene Kriterien wie z.B. Verbrauch, Tankentlüftung, Ablauf von Diagnosefunktionen berücksichtigt werden. Beispielsweise kann hierdurch eine Betriebsart in Abhängigkeit vom Kraftstoffverbrauch der Brennkraftmaschine 10 in die BA-Liste2 ausgewählt werden.

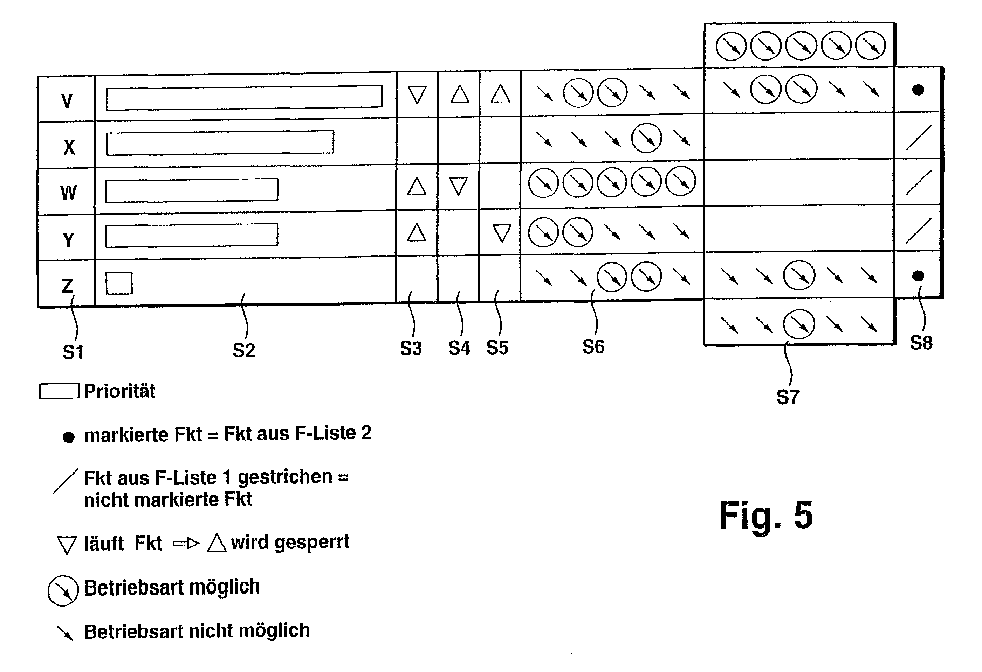

Figur 5 zeigt schematisch in Form einer Tabelle ein Beispiel für ein Auswahlverfahren im Scheduler, wobei die Spalte 1 die Funktionsbezeichnung der Funktionen 12 aus der Liste der laufbereiten Funktionen 12 (F-Liste1) angibt, die der Scheduler verwaltet. Die Spalte 2 gibt die Priorität dieser Funktionen 12 in Form von Balken an. Die Spalten 3, 4 und 5 bilden eine Funktionen-Exklusionstabelle, d.h. eine Tabelle die angibt welche Funktionen 12 nicht gleichzeitig ablaufen dürfen. In der Spalte 6 sind die den Funktionen 12 zugeordneten Betriebsarten dargestellt. Die Spalte 7 stellt die Auswahl der BA-Liste2 bzw. eine Betriebsarten-Exklusion dar. Die obere Zelle der Spalte 7 gibt die aus einem Zwischenergebnis der Betriebsartenkoordination 14 in Figur 2 möglichen Betriebsarten an, sie entspricht der Liste der möglichen Betriebsarten (BA-Liste1). Die untere Zelle der Spalte 7 gibt die vom Scheduler 13 bei der Betriebsartenkoordination 14 in Figur 2 angeforderten Betriebsarten (BA-Liste2) an. Die in der Spalte 8 mit einem Punkt gekennzeichneten Funktionen 12, sind die markierten bzw. Zur Aktivierung bereitgestellten Funktionen 12. Diese Funktionen 12 bilden die Liste der laufbereiten Funktionen 12 (F-Liste2). Die mit einem Strich gekennzeichneten Funktionen 12 entsprechen den in Schritt 440 (siehe Figur 4) aus der Liste der laufbereiten Funktionen 12 (F-Liste1) gestrichenen Funktionen 12.

Wie man in Fig. 5 erkennen kann, sind die Funktionen 12 V,X,W,Y,Z in der Spalte 2 in der Reihenfolge ihrer Priorität dargestellt, wobei lange Balken eine hohe Priorität und kurze Balken niedrige Priorität bedeuten. Eine hohe Priorität der Funktionen 12 signalisiert eine hohes Ausmaß an Laufbereitschaft bzw. den Wunsch möglichst bald ablaufen zu dürfen.

Die Spalten 3,4,5 stellen die Ausschlußbedingungen, bzw. Funktionen-Exklusionen dar. Eine Spalte der Funktionen-Exklusionen ist folgendermaßen zu lesen: Wenn eine Funktion markiert wurde, die mit einem Dreieck mit Spitze nach unten gekennzeichnet ist, dann dürfen die Funktionen 12 nicht markiert werden, die in der gleichen Spalte mit einem Dreieck mit Spitze nach oben gekennzeichnet sind. Zum Beispiel bedeutet die Spalte 3 in der Figur 5, daß die Funktionen 12 W und Y nicht markiert werden dürfen, wenn die Funktion V markiert wurde. Die Spalte 4 bedeutet, daß Funktion V nicht markiert werden darf, wenn Funktion W gerade markiert wurde und die Spalte 5 bedeutet, daß Funktion V nicht markiert werden darf, wenn Funktion Y gerade markiert wurde. Die Spalten 4 und 5 ergeben sich bereits aus der Spalte 3. Da, wie es aus der Spalte 3 hervorgeht, Funktion W nicht markiert werden darf, wenn Funktion V gerade markiert wurde, gilt im allgemeinen auch der Umkehrschluß, also, daß Funktion V nicht markiert werden darf, wenn Funktion W gerade markiert wurde.

In der Spalte 6 (Spalte der den Funktionen 12 zugeordneten Betriebsarten) bedeuten umkreiste Pfeile, daß die zugehörige Funktion ablaufen darf, wenn die dem umkreisten Pfeil entsprechende Betriebsart eingestellt ist und normale Pfeile, daß die Funktion in die dem normalen Pfeil entsprechenden Betriebsart nicht ablaufen darf. Man kann aus dieser Spalte erkennen, daß einige Funktionen 12 auch in mehr als einer Betriebsart ablaufen dürfen, d.h. mehrere Pfeile sind umkreist dargestellt.

In der Spalte 7 ist der Ablauf der Betriebsarten-Exklusion dargestellt, d.h. wie die Liste der möglichen Betriebsarten (BA-Liste1) um die Betriebsarten vermindert wird, in denen die markierten Funktionen 12 nicht ablaufen dürfen. Die Verminderung der BA-Liste1 und der F-Liste1 kann nicht getrennt betrachten werden. Die Verminderung der BA-Liste1 und der F-Liste1 erfolgt gleichzeitig in den Schritten 460 und 470, wie es aus der Beschreibung der Figur 4 hervorgeht. Die Liste der möglichen Betriebsarten wird von oben nach unten vermindert. Die umkreist gezeichneten Pfeile geben die Betriebsarten an, die noch möglich sind.

In diesem Beispiel kann man in der oberen Zelle der Spalte 7 erkennen, daß alle Betriebsarten zunächst möglich sind. D.h. alle Pfeile sind zunächst umkreist. In der Spalte 8 kann man erkennen, daß die Funktion V markiert wurde. Hieraus ergibt sich, daß aus der oberen Zelle genau die Betriebsarten gestrichen wurden, in denen die markierte Funktion V, wie es aus der Spalte 6 hervorgeht, nicht ablaufen darf. Dieses Ergebnis kann man in der zweiten Zelle der Spalte 7 ablesen. Man erkennt, daß nur die Betriebsarten übrig bleiben, in denen die Funktion V ablaufen darf. Die Funktionen 12 X,W und Y wurden nicht markiert, deshalb beeinflussen diese auch nicht mehr die Auswahl der Betriebsarten. Die Funktion Z wurde auch markiert. Das bedeutet, daß die Betriebsarten aus der zweiten Zelle der Spalte 7 gestrichen werden, in denen die markierte Funktion Z, wie es aus der Spalte 6 hervorgeht, nicht ablaufen darf. In der letzten Zelle der Spalte 7 ist das Ergebnis der Auswahl der noch möglichen Betriebsarten (BA-Liste2) dargestellt.

Die Funktion V wurde als erste markiert, weil sie die höchste Priorität besitzt, d.h. den längsten Balken aufweist und weil die zugeordneten Betriebsarten, wie es aus der Spalte 6 hervorgeht, mit zwei der möglichen Betriebsarten der Zelle 1, Spalte 7 übereinstimmen. Die Funktion X wurde nicht markiert, weil die zugeordnete Betriebsart (siehe Spalte 6) mit keiner der noch möglichen Betriebsarten wie es aus der zweiten Zelle der Spalte 7 hervorgeht übereinstimmt. Die Funktionen W und Y wurden nicht markiert, weil diese Funktionen nicht gleichzeitig mit der bereits markierten Funktion V ablaufen dürfen, wie es aus der Funktionen-Exklusionstabelle Spalten 3,4 und 5 hervorgeht.

Die Betriebsart, die in der unteren Zelle der Spalte 7 übrigbleibt entspricht der Betriebsart, die der Scheduler 13 bei der Betriebsartenkoordination 14 anfordert. Es kann auch mehr als eine Betriebsart bei der Betriebsartenkoordination 14 angefordert werden.

## Patentansprüche

1. Verfahren zum Betrieb einer Brennkraftmaschine (10), insbesondere einer Brennkraftmaschine (10) mit Direkteinspritzung (DE) oder Saugrohreinspritzung (SRE) mit einem Steuergerät (11),
- wobei das Steuergerät (11) bzw. seine Software eine Vielzahl von Funktionen (12) und einen Scheduler (13) zum Aktivieren der Funktionen (12) aufweist,
- wobei die Brennkraftmaschine (10) in mindestens zwei Betriebsarten betreibbar ist,
**dadurch gekennzeichnet, dass**
- jeder Funktion (12) mindestens eine Betriebsart zugeordnet wird,
- der Scheduler (13) eine Liste laufbereiter Funktionen (12) bildet (F-Liste1),
- eine Betriebsarten-Liste (BA-Liste1) und die Liste laufbereiter Funktionen (F-Liste1)in einem Auswahlverfahren (42) eingehen und eine Liste möglicher Betriebsarten (BA-Liste2) und eine Liste markierter bzw. zur Aktivierung bereitgestellter Funktionen (F-Liste2) erzeugt wird,
- wobei alle markierten Funktionen (F-Liste2) unter den möglichen Betriebsarten (BA-Liste2) lauffähig sind,
- und dass die markierten Funktionen (F-Liste2) erst dann aktiviert werden, wenn eine dieser markierten Funktionen (12) zugeordnete Ist-Betriebsart (41) eingestellt ist.

2. Verfahren nach Anspruch 1,
**dadurch gekennzeichnet, daß**
laufbereite Funktionen (12) mit Hilfe des Schedulers (13) in Abhängigkeit von deren zugeordneter Betriebsart und den momentan einstellbaren Betriebsarten der Brennkraftmaschine (10) markiert bzw. zur Aktivierung bereitgestellt werden.

3. Verfahren nach Anspruch 1 oder 2,
**dadurch gekennzeichnet, daß**
Betriebsarten bei einer Betriebsartenkoordination (14) durch den Scheduler (13) anfordert werden, in denen die markierten Funktionen (12) ablaufen dürfen.

4. Verfahren nach mindestens einem der vorhergehenden Ansprüche,
**dadurch gekennzeichnet, daß**
die Brennkraftmaschine (10) mit Hilfe einer Betriebsartenumschaltung (15) gegebenenfalls in die den markierten Funktionen (12) zugeordnete Betriebsart umgeschaltet wird.

5. Verfahren nach mindestens einem der vorhergehenden Ansprüche,
**dadurch gekennzeichnet, daß**
die markierten Funktionen (12) erst dann durch den Scheduler (13) aktiviert werden, wenn die den markierten Funktionen (12) zugeordnete Betriebsart eingestellt ist.

6. Verfahren nach mindestens einem der vorhergehenden Ansprüche,
**dadurch gekennzeichnet, daß**
den Funktionen (12) in Abhängigkeit von Betriebsbedingungen der Brennkraftmaschine (10) mindestens eine Betriebsart zugeordnet wird, in denen die Funktionen (12) ablaufen können oder genau die Betriebsarten zugeordnet werden, in denen die Funktionen (12) nicht ablaufen können.

7. Verfahren nach mindestens einem der vorhergehenden Ansprüche,
**dadurch gekennzeichnet, daß**
den Funktionen (12) Betriebsarten fest zugeordnet werden.

8. Verfahren nach mindestens einem der vorhergehenden Ansprüche,
**dadurch gekennzeichnet, daß**
der Scheduler (13) genau die Funktionen (12) markiert bzw. zur Aktivierung bereitstellt, die gleichzeitig ablaufen können und die mindestens eine gemeinsame zugeordnete Betriebsart aufweisen.

9. Verfahren nach mindestens einem der vorhergehenden Ansprüche,
**dadurch gekennzeichnet, daß**
der Scheduler (13) die Funktionen (12) in der Reihenfolge ihrer Prioritäten markiert bzw. zur Aktivierung bereitstellt.

10. Verfahren nach mindestens einem der vorhergehenden Ansprüche,
**dadurch gekennzeichnet, daß**
der Scheduler (13) eine einzige Funktion (12) oder gleichzeitig mehrere markierte Funktionen (12) aktivieren kann.

11. Verfahren nach mindestens einem der vorhergehenden Ansprüche,
**dadurch gekennzeichnet, daß**
die Funktionen (12) Diagnose- und/oder Motorsteuer-Funktionen und/oder Betriebsarten der Brennkraftmaschine (10) darstellen.

12. Verfahren nach mindestens einem der vorhergehenden Ansprüche,
**gekennzeichnet durch**
seine Anwendung in einem Getriebe (16), Bremssystem (17) oder beliebigen elektromechanischen System (18).

13. Steuergerät zum Betrieb einer Brennkraftmaschine (10), zur Anwendung bei einen Verfahren gemäß einem der Ansprüche 1-12, insbesondere einer Brennkraftmaschine (10) mit Direkteinspritzung (DE) oder Saugrohreinspritzung (SRE) mit einem Steuergerät (11),
- wobei das Steuergerät (11) bzw. seine Software eine Vielzahl von Funktionen (12) und einen Scheduler (13) zum Aktivieren der Funktionen (12) aufweist,
- wobei die Brennkraftmaschine (10) in mindestens zwei Betriebsarten betreibbar ist,
**dadurch gekennzeichnet, dass**
- jeder Funktion (12) mindestens eine Betriebsart zugeordnet wird,
- der Scheduler (13) eine Liste laufbereiter Funktionen (12) bildet (F-Liste1),
- eine Betriebsarten-Liste (BA-Liste1) und die Liste laufbereiter Funktionen (F-Liste1) in einem Auswahlverfahren (42) eingehen und eine Liste möglicher Betriebsarten (BA-Liste2) und eine Liste markierter bzw. zur Aktivierung bereitgestellter Funktionen (F-Liste2) erzeugt wird,
- wobei alle markierten Funktionen (F-Liste2) unter den möglichen Betriebsarten (BA-Liste2) lauffähig sind,
- und dass die markierten Funktionen (F-Liste2) erst dann aktiviert werden, wenn eine dieser markierten Funktionen (12) zugeordnete Ist-Betriebsart (41) eingestellt ist.

## Claims

1. Method for operating an internal combustion engine (10), in particular an internal combustion engine (10) with direct injection (DE) or intake manifold injection (SRE) having a controller (11),
- the controller (11) or its software having a plurality of functions (12) and a scheduler (13) for activating the functions (12),
- the internal combustion engine (10) being capable of being operated in at least two modes of operation,
**characterized in that**
- each function (12) is assigned at least one mode of operation,
- the scheduler (13) forms a list of functions (12), (F-List 1) which are ready to run,
- a mode of operation list (BA-List 1) and the list of functions (F-List 1) which are ready to run are included in a selection method (42) and a list of possible modes of operation (BA-List 2) and a list of functions (F-List 2) which are marked or are prepared for activation is generated, all the marked functions (F-List 2) being capable of running under the possible modes of operation (BA-List 2),
- and **in that** the marked functions (F-List 2) are not activated until an actual mode of operation (41) which is assigned to these marked functions (12) is set.

2. Method according to Claim 1, **characterized in that** functions (12) which are ready to run are marked or made available for activation using the scheduler (13) as a function of their assigned mode of operation and the operating modes of the internal combustion engine (10) which can be set at a given time.

3. Method according to Claim 1 or 2, **characterized in that** modes of operation in which the marked functions (12) are allowed to run are requested by the scheduler (13) in a mode of operation coordination means (14).

4. Method according to at least one of the preceding claims, **characterized in that** the internal combustion engine (10) is switched over, if appropriate into the mode of operation which is assigned to the marked functions (12), using a mode of operation switch-over means (15).

5. Method according to at least one of the preceding claims, **characterized in that** the marked functions (12) are not activated by the scheduler (13) until the mode of operation which is assigned to the marked functions (12) is set.

6. Method according to at least one of the preceding claims, **characterized in that** at least one mode of operation in which the functions (12) can run, or precisely the modes of operation in which the functions (12) cannot run, are assigned to the functions (12) in accordance with operating conditions of the internal combustion engine (10).

7. Method according to at least one of the preceding claims, **characterized in that** modes of operation are permanently assigned to the functions (12).

8. Method according to at least one of the preceding claims, **characterized in that** the scheduler (13) marks, or makes available for activation, precisely those functions (12) which can run simultaneously and which have at least one common assigned mode of operation.

9. Method according to at least one of the preceding claims, **characterized in that** the scheduler (13) marks, or makes available for activation, the functions (12) in the order of their priorities.

10. Method according to at least one of the preceding claims, **characterized in that** the scheduler (13) can activate a single function (12) or a plurality of marked functions (12) simultaneously.

11. Method according to at least one of the preceding claims, **characterized in that** the functions (12) constitute diagnostic and/or engine control functions and/or modes of operation of the internal combustion engine (10).

12. Method according to at least one of the preceding claims, **characterized by** its application in a gearbox (16), brake system (17) or any desired electromechanical system (18).

13. Controller for operating an internal combustion engine (10), for application in a method according to one of Claims 1 to 12, in particular an internal combustion engine (10) with direct injection (DE) or intake manifold injection (SRE) having a controller (11),
- the controller (11) or its software having a plurality of functions (12) and a scheduler (13) for activating the functions (12),
- the internal combustion engine (10) being capable of being operated in at least two modes of operation,
**characterized in that**
- each function (12) is assigned at least one mode of operation,
- the scheduler (13) forms a list of functions (12), (F-List 1) which are ready to run,
- a mode of operation list (BA-List 1) and the list of functions (F-List 1) which are ready to run are included in a selection method (42) and a list of possible modes of operation (BA-List 2) and a list of functions (F-List 2) which are marked or are prepared for activation is generated, all the marked functions (F-List 2) being capable of running under the possible modes of operation (BA-List 2),
- and **in that** the marked functions (F-List 2) are not activated until an actual mode of operation (41) which is assigned to these marked functions (12) is set.

## Revendications

1. Procédé pour faire fonctionner un moteur à combustion interne (10), en particulier un moteur à combustion interne (10) à injection directe (DE) ou dans un collecteur d'admission (SRE), comprenant un appareil de commande (11), dans lequel l'appareil de commande (11), respectivement son logiciel, présente une quantité de fonctions (12) et un programmateur (13) pour activer les fonctions (12), le moteur à combustion interne (10) pouvant fonctionner selon au moins deux modes de fonctionnement,
**caractérisé en ce que**
- chaque fonction (12) est associée au moins à un mode de fonctionnement,
- le programmateur (13) forme une liste de fonctions prêtes à fonctionner (12) (liste F-1),
- une liste de modes de fonctionnement (liste BA-1) et la liste de fonctions prêtes à fonctionner (liste F-1) sont introduites dans un procédé de sélection (42) et une liste de modes de fonctionnement possibles (liste BA-2) et une liste de fonctions marquées ou prépositionnées pour activation (liste F-2) sont générées,
- toutes les fonctions marquées (liste F-2) sont capables de fonctionner sous les modes de fonctionnement possibles (liste BA-2), et
- les fonctions marquées (liste F-2) ne peuvent être activées qu'après réglage d'un mode de fonctionnement réel (41) associé à ces fonctions marquées (12).

2. Procédé selon la revendication 1,
**caractérisé en ce que**
les fonctions prêtes à fonctionner (12) sont marquées ou prépositionnées pour activation, à l'aide du programmateur (13) en fonction de leur mode de fonctionnement associé et des modes de fonctionnement immédiatement réglables du moteur à combustion interne (10).

3. Procédé selon la revendication 1 ou 2,
**caractérisé en ce que**
les modes de fonctionnement sont demandés, lors d'une coordination de modes de fonctionnement (14), par le programmateur (13) dans lequel les fonctions marquées (12) doivent fonctionner.

4. Procédé selon au moins une des revendications précédentes,
**caractérisé en ce que**
le moteur à combustion interne (10) change de fonctionnement à l'aide d'une commutation des modes de fonctionnement (15) le cas échéant dans le mode de fonctionnement associé aux fonctions marquées (12).

5. Procédé selon au moins une des revendications précédentes,
**caractérisé en ce que**
les fonctions marquées (12) ne peuvent être activées par le programmateur (13) qu'après réglage du mode de fonctionnement associé aux fonctions marquées (12).

6. Procédé selon au moins une des revendications précédentes,
**caractérisé en ce que**
au moins un mode de fonctionnement est associé aux fonctions (12) en fonction des conditions de fonctionnement du moteur à combustion interne (10), les fonctions (12) pouvant fonctionner dans ce mode de fonctionnement ou juste être associées aux modes de fonctionnement dans lequel les fonctions (12) ne peuvent pas fonctionner.

7. Procédé selon au moins une des revendications précédentes,
**caractérisé en ce que**
des modes de fonctionnement sont associés de manière fixe aux fonctions (12).

8. Procédé selon au moins une des revendications précédentes,
**caractérisé en ce que**
le programmateur (13) marque ou prépositionne pour activation juste les fonctions (12) qui peuvent fonctionner en même temps et qui présentent au moins un mode de fonctionnement associé commun.

9. Procédé selon au moins une des revendications précédentes,
**caractérisé en ce que**
le programmateur (13) marque ou prépositionne pour activation les fonctions (12) dans une série en fonction de leurs priorités.

10. Procédé selon au moins une des revendications précédentes,
**caractérisé en ce que**
le programmateur (13) peut activer une seule fonction (12) ou plusieurs fonctions marquées (12) en même temps.

11. Procédé selon au moins une des revendications précédentes,
**caractérisé en ce que**
les fonctions (12) représentent des fonctions de diagnostic et/ou des fonctions de commande motrice et/ou des modes de fonctionnement du moteur à combustion interne (10).

12. Procédé selon au moins une des revendications précédentes,
**caractérisé en ce qu'**
il est utilisé dans une boîte de transmission (16), un système de freinage (17) ou tout système électromécanique approprié (18).

13. Appareil de commande pour faire fonctionner un moteur à combustion interne (10), destiné à être utilisé par un procédé selon une des revendications 1 à 12, en particulier pour un moteur à combustion interne (10) à injection directe (DE) ou dans un collecteur d'admission (SRE), comprenant un appareil de commande (11), dont le logiciel présente une quantité de fonctions (12) et un programmateur (13) pour activer les fonctions (12), le moteur à combustion interne (10) pouvant fonctionner selon au moins deux modes de fonctionnement,
**caractérisé en ce que**
- chaque fonction (12) est associée au moins à un mode de fonctionnement,
- le programmateur (13) forme une liste de fonctions prêtes à fonctionner (12) (liste F-1),
- une liste de modes de fonctionnement (liste BA-1) et la liste de fonctions prêtes à fonctionner (liste F-1) sont introduites dans un procédé de sélection (42) et une liste de modes de fonctionnement possibles (liste BA-2) et une liste de fonctions marquées ou prépositionnées pour activation (liste F-2) sont générées,
- toutes les fonctions marquées (liste F-2) sont capables de fonctionner sous les modes de fonctionnement possibles (liste BA-2), et
- les fonctions marquées (liste F-2) ne peuvent être activées qu'après réglage d'un mode de fonctionnement réel (41) associé à ces fonctions marquées (12).
